(19) Europäisches Patentamt
European Patent Office
Office européen des brevets

(11) **EP 4 661 354 A1**

(12) **EUROPEAN PATENT APPLICATION**
published in accordance with Art. 153(4) EPC

(43) Date of publication:
**10.12.2025 Bulletin 2025/50**

(21) Application number: **23925969.0**

(22) Date of filing: **27.09.2023**

(51) International Patent Classification (IPC):
***H04L 41/0803*** *(2022.01)*

(52) Cooperative Patent Classification (CPC):
Y02D 30/50

(86) International application number:
**PCT/CN2023/122011**

(87) International publication number:
**WO 2024/183267 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2023 CN 202310213240**

(71) Applicants:
• **Comac Beijing Aircraft Technology Research
Institute
Beijing 102200 (CN)**
• **Commercial Aircraft Corporation of China, Ltd
Shanghai 200120 (CN)**

(72) Inventors:
• **LI, Jinheng
Beijing 102200 (CN)**
• **WANG, Zhuojia
Beijing 102200 (CN)**
• **TU, Linyan
Beijing 102200 (CN)**
• **YANG, Yifan
Beijing 102200 (CN)**
• **YUE, Runyu
Beijing 102200 (CN)**
• **DONG, Hao
Beijing 102200 (CN)**

(74) Representative: **Gille Hrabal
Partnerschaftsgesellschaft mbB
Patentanwälte
Brucknerstraße 20
40593 Düsseldorf (DE)**

(54) **AVIONICS DATA NETWORK CONFIGURATION METHOD AND APPARATUS, AND COMPUTER DEVICE AND STORAGE MEDIUM**

(57) The present disclosure provides a method and an apparatus for configuring an avionics data network, a computer device, and storage medium, relates to the technical field of avionics systems, and can improve efficiency of updating and iterating network configurations. The method comprises: obtaining link information of each virtual link in the avionics data network, the link information comprising a maximum frame length and a transmission period; setting bandwidth package(s) according to the link information of the virtual link(s), and assigning each virtual link to a corresponding bandwidth package; calculating a total bandwidth, a transmission period, and duration of each bandwidth package according to the link information of each virtual link and a total bandwidth of the avionics data network; and determining respective phases of all virtual links according to the link information of each virtual link.

| | |
|---|---|
| Obtain link information of each virtual link in the avionics data network, where the link information comprises a maximum frame length and a transmission period | S101 |
| Set bandwidth package(s) according to the link information of the virtual link(s), and assign each virtual link to a corresponding bandwidth package | S102 |
| Calculate a total bandwidth, a transmission period, and duration of each bandwidth package according to the link information of each virtual link and a total bandwidth of the avionics data network | S103 |
| Determine respective phases of all virtual link(s) according to the link information of each virtual link | S104 |

**FIG. 1**

## Description

### TECHNICAL FIELD

The present disclosure relates to the technical field of avionics systems, and in particular to a method and an apparatus for configuring an avionics data network, a computer device, and a storage medium.

### BACKGROUND

In modern civil aircraft, multiple avionics applications are integrated into the same system, a.k.a. the avionics core processing system, to reduce manufacturing costs. The system is configured for providing functions such as data processing, data transmission, and data interface for the avionics applications. The avionics applications shall be independent from each other to ensure security, which is ultimately important. Hence, the system divides the avionics applications into separate partitions that are isolated from each other. The system integration provider needs to configure the respective resources occupied by each partition to ensure that each partition can meet the requirements of the avionics application. The configuration of an avionics data network plays a significant role.

The avionics data network comprises terminal system(s), switch(es), and network cable(s), and are based on the standard named ARINC 664, i.e., Avionics Full-Duplex Switched Ethernet. The standard defines a virtual link, which is a logical one-way connection and represents a communication link from a source system to one or more destination systems. Multiple virtual links may share the same physical link through time division multiplexing. During configuration of the network, the resources should be allocated to each virtual link as accurately as possible with a certain margin. Allocating excessive resources would result in the total remaining resources that are insufficient to support other partitions. The objective of configuring the avionics data network as follows: the virtual links are reasonably configured to limit their respective time of occupying the physical link, such that the multiple virtual links can complete their data transmission at different moments.

Generally, two parameters are configured for the virtual link, that is, a transmission period of the virtual link and a maximum frame length of the data frame sent by the virtual link in each period. In the ARINC 664 network, the time interval between two sequential transmissions of the virtual link shall not be smaller than its period. Hence, when transmission of a previous virtual link occupies more time, time originally scheduled for transmission of the current virtual link is engaged, and the transmission of the current virtual link would be postponed until the transmission of the previous link is completed. In this case, latency of the current virtual link is increased, and the additional delay is also called "jitter". The jitters should be avoided as much as possible when configuring the network. Since the latency and the jitters would affect all subsequent virtual links, all configurations of the data network need to be re-iterated and re-generated to ensure performance and stability.

In a typical development process of civil aircraft, an overall iteration of the configurations may take hours even days. In practice, changes and updates in avionics applications are quite common, and it is inevitable that the configurations of the data network need to be adjusted accordingly. Therefore, updates and iterations of the network configurations are inefficient in the related art.

### SUMMARY

A method and an apparatus for configuring an avionics data network, a computer device, and storage medium are provided according to embodiments of the present disclosure. Efficiency of updating and iterating network configurations is improved.

According to embodiments of the present disclosure, a method for configuring an avionics data network is provided. The method comprises: obtaining link information of each virtual link of one or more virtual links in the avionics data network, where the link information comprises a maximum frame length and a transmission period; setting one or more bandwidth packages according to the link information of the one or more virtual links, and assigning each virtual link to a corresponding one of the one or more bandwidth packages; calculating a total bandwidth of each bandwidth package, a transmission period of each bandwidth package, and duration of each bandwidth package according to the link information of each virtual link and a total bandwidth of the avionics data network; and determining respective phases of all virtual links according to the link information of each virtual link.

In an embodiment, the method further comprises: calculating a bandwidth of an $i^{th}$ virtual link of the one or more virtual links through $M_i = N_i/TV_i$; and calculating a transmission time of the $i^{th}$ virtual link through $tv_i = N_i/BPS$; where $M_i$ represents the bandwidth of the $i^{th}$ virtual link, $N_i$ represents the maximum frame length of the $i^{th}$ virtual link, $TV_i$ represents the transmission period of the $i^{th}$ virtual link, $tv_i$ represents the transmission time of the $i^{th}$ virtual link, and $BPS$ represents the total bandwidth of the avionics data network.

In an embodiment, calculating the total bandwidth of each bandwidth package, the transmission period of each bandwidth package, and the duration of each bandwidth package according to the link information of each virtual link and the total bandwidth of the avionics data network comprises: calculating the total bandwidth and the duration of an $m^{th}$ bandwidth package of the one or more bandwidth packages through $MB_m = BPS \times td_m/TB_m$ and $MB_m \geq \sum_{p=1}^{n} M_p$;

and determining the transmission period $TB_m$ of the $m^{th}$ bandwidth package according to a minimum transmission period $TV_{min}$ among all virtual links assigned to the $m^{th}$ bandwidth package among the one or more virtual links; where $MB_m$ represents the total bandwidth of the $m^{th}$ bandwidth pack, $td_m$ represents the duration of the $m^{th}$ bandwidth package, n represents a quantity of all virtual links assigned to the $m^{th}$ bandwidth package, and $M_p$ represents the bandwidth of a virtual link assigned to the $m^{th}$ bandwidth package among the one or more virtual links.

In an embodiment, determining the respective phases of all virtual links according to the link information of each virtual link comprises: determining the respective phase $P_i$ of the $i^{th}$ virtual link, where the respective phase $P_i$ satisfies

$$P_i \geq \sum_{j=1}^{i-1} tv_j$$, and $tv_j$ represents time required for completing data transmission of a $j^{th}$ virtual link in a bandwidth package, to which the $i^{th}$ virtual link is assigned, among the one or more bandwidth packages.

In an embodiment, the method also comprises: arranging the one or more bandwidth packages according to a chronological order determined by a start time t of each bandwidth package.

According to embodiments of the present disclosure, an apparatus for configuring an avionics data network is provided. The apparatus comprises: an obtaining module, configured for obtaining link information of each virtual link of one or more virtual links in the avionics data network, where the link information comprises a maximum frame length and a transmission period; an assigning module, configured for setting one or more bandwidth packages according to the link information of the one or more virtual links and assigning each virtual link to a corresponding one of the one or more bandwidth packages; a calculating module, configured for calculating a total bandwidth of each bandwidth package, a transmission period of each bandwidth package, and duration of each bandwidth package according to the link information of each virtual link and a total bandwidth of the avionics data network; and a determining module, configured for determining respective phases of all virtual links according to the link information of each virtual link.

In an embodiment, the calculating module is configured for: calculating a bandwidth of an $i^{th}$ virtual link of the one or more virtual links through $M_i = N_i/TV_i$; and calculating a transmission time of the $i^{th}$ virtual link through $tv_i = N_i/BPS$; where $M_i$ represents the bandwidth of the $i^{th}$ virtual link, $N_i$ represents the maximum frame length of the $i^{th}$ virtual link, $TV_i$ represents the transmission period of the $i^{th}$ virtual link, $tv_i$ represents the transmission time of the $i^{th}$ virtual link, and $BPS$ represents the total bandwidth of the avionics data network.

In an embodiment, the calculating module is configured for: calculating the total bandwidth and the duration of an $m^{th}$ bandwidth package of the one or more bandwidth packages through $MB_m = BPS \times td_m/TB_m$ and

$$MB_m \geq \sum_{p=1}^{n} M_p$$; and determining the transmission period $TB_m$ of the $m^{th}$ bandwidth package according to a minimum transmission period $TV_{min}$ among all virtual links assigned to the $m^{th}$ bandwidth package among the one or more virtual links; where $MB_m$ represents the total bandwidth of the $m^{th}$ bandwidth pack, $td_m$ represents the duration of the $m^{th}$ bandwidth package, n represents a quantity of all virtual links assigned to the $m^{th}$ bandwidth package, and $M_p$ represents the bandwidth of a virtual link assigned to the $m^{th}$ bandwidth package among the one or more virtual links.

In an embodiment, the determining module is configured for: determining the respective phase $P_i$ of the $i^{th}$ virtual link, where the respective phase $P_i$ satisfies $$P_i \geq \sum_{j=1}^{i-1} tv_j$$, and $tv_j$ represents time required for completing data transmission of a $j^{th}$ virtual link in a bandwidth package, to which the $i^{th}$ virtual link is assigned, among the one or more bandwidth packages.

In an embodiment, the determining module is configured for: arranging the one or more bandwidth packages according to a chronological order determined by a start time t of each bandwidth package.

A computer device is further provided. The computer comprises a memory, a processor, and a computer program stored in the memory and executable on the processor, where the computer program implements any foregoing method when executed by the processor.

A computer-readable storage medium is further provided. The computer-readable storage medium stores a computer program, and the computer program when executed by a processor implements any foregoing method.

A computer program product is further provided. The computer program product comprises a computer program, and the computer program when executed by a processor implements any foregoing method.

The method and the apparatus for configuring an avionics data network, the computer device, and the storage medium are provided according to embodiments of the present disclosure. The link information of each virtual link is obtained, where the link information comprises the maximum frame length and the transmission period. The one or more bandwidth packages are set according to the link information, and each virtual link is assigned to the corresponding bandwidth package. The total bandwidth, the transmission period, and the duration of each bandwidth package are calculated according to the link information of each virtual link and the total bandwidth of the avionics data network. The respective phases of all virtual links are determined according to the link information of each virtual link. The bandwidth package(s) configured herein enables classifying a large number of virtual links and configuring them separately according to a requirement of actual integration. The configuration is less complex, the virtual links of distinct types are less correlated, and thus it is avoided that minor changes in configurations affect a large number of other virtual links. That is, when configurations on a few virtual links need to be changed, the other virtual links are less impacted. Hence, during integration, it is not necessary to update and iterate all network configurations in case of minor changes. The integration efficiency is improved.

**BRIEF DESCRIPTION OF THE DRAWINGS**

FIG.1 is a flow chart of a method for configuring an avionics data network according to an embodiment of the present disclosure.

FIG.2 is a flow chart of a method for configuring an avionics data network according to another embodiment of the present disclosure.

FIG. 3 is a schematic diagram of calculation of parameters of virtual links according to an embodiment of the present disclosure.

Fig. 4 is a schematic diagram of configuration of bandwidth packages according to an embodiment of the present disclosure.

Fig. 5 is a schematic diagram of transmission jitters due to competition among virtual links according to an embodiment of the present disclosure.

FIG. 6 is a schematic diagram of elimination of jitters through phase setting according to an embodiment of the present disclosure.

FIG. 7 is a schematic diagram of an apparatus for configuring an avionics data network according to an embodiment of the present disclosure.

FIG. 8 is a schematic diagram of a computer device according to an embodiment of the present disclosure.

**DETAILED DESCRIPTION OF THE EMBODIMENTS**

Hereinafter technical schemes of the present disclosure are illustrated in detail using the drawings and embodiments to facilitate understanding of the technical schemes. The embodiments of the present disclosure and specific features in the embodiments are intended for detailed illustration of the technical schemes, not for limiting the technical solutions. The embodiments of the present disclosure and the specific features in the embodiments can be combined with each other when there is no conflict.

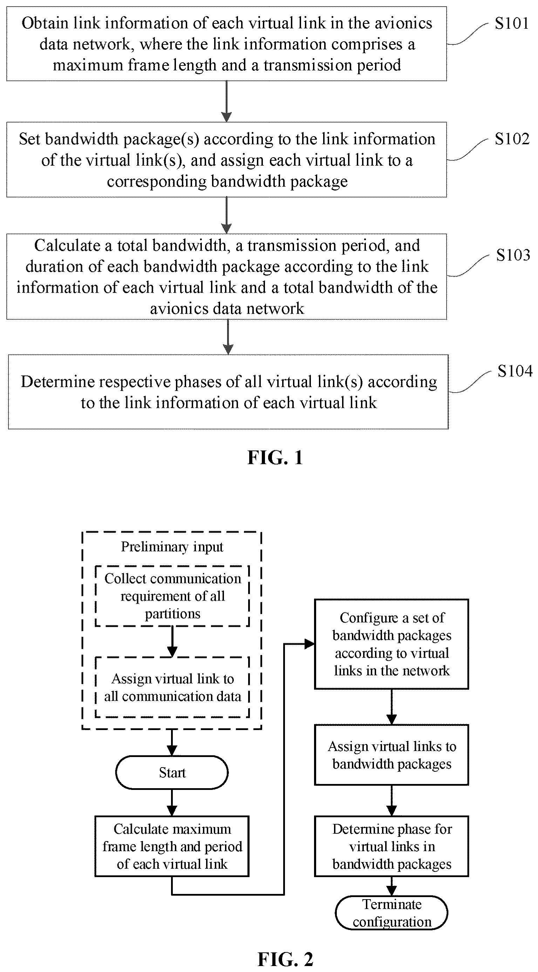

Reference is made to FIG. 1 and FIG. 2, which shows a method for configuring an avionics data network according to embodiments of the present disclosure. The method comprises steps S101 to S104.

In step S101, link information of each virtual link in the avionics data network are obtained, where the link information comprises a maximum frame length and a transmission period.

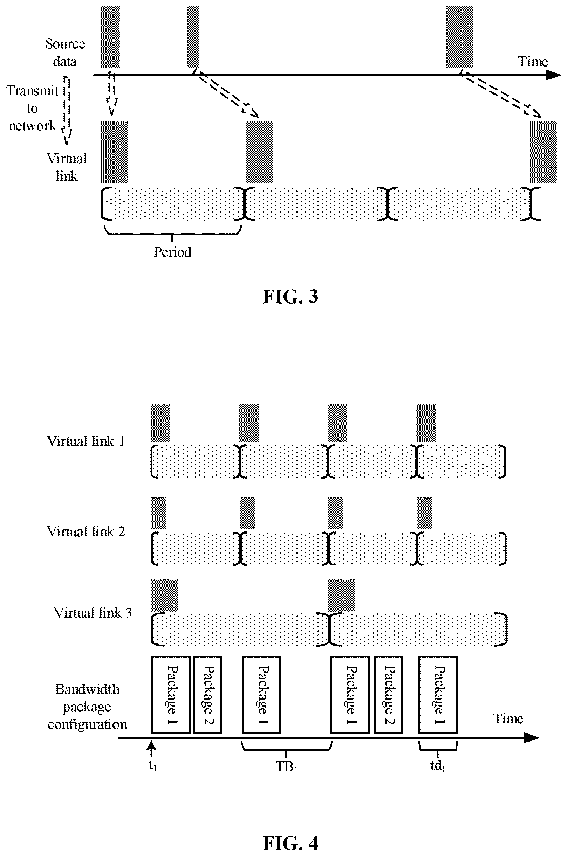

In an embodiment, on a basis of data to be transmitted in an $i^{th}$ virtual link, it may be obtained through calculation that the $i^{th}$ virtual link needs to transmit the data at an interval of $TV_i$ and that each time a maximum data amount of $N_i$ bytes is transmitted. As shown in Figure 3, the period $TV$ the virtual link and the maximum frame length $N$ are determined according to a frequency and a total data amount of a network source transmitting data within a certain period of time, as well as other specific requirements of data users. The configuration shall ensure that a bandwidth of the virtual link is not less than a total bandwidth of the source data.

The bandwidth of the $i^{th}$ virtual link may be calculated through the equation $M_i(kbit/s) = N_i(kbit)/TV_i(s)$

A transmission time of the $i^{th}$ virtual link may be calculated through the formula $tv_i(s) = N_i(kbit)/BPS(kbit/s)$

$M_i$ represents the bandwidth of the $i^{th}$ virtual link, $N_i$ represents the maximum frame length of the $i^{th}$ virtual link, $TV_i$ represents the transmission period of the $i^{th}$ virtual link, $tv_i$ represents the transmission time of the $i^{th}$ virtual link, and $BPS$ represents the total bandwidth of the avionics data network.

In step S102, bandwidth package(s) are set according to the link information, and each virtual link is assigned to a corresponding bandwidth package.

In an embodiment, a set of bandwidth packages are configured according to the virtual links in the network, and each virtual links is assigned to its corresponding bandwidth package according to its frame length and its period. Herein the entire transmission time of the data network is divided into these bandwidth packages, and each bandwidth package has three main properties: total bandwidth, a transmission period, and duration. Different from the related art in which all virtual links are directly assigned to the entire network transmission duration, herein the virtual links are classified and respectively assigned into bandwidth packages. The bandwidth package is regarded as a key concept of the present disclosure and helps achieve the advantages. Setting the bandwidth packages enables classification and separate configuration of a large number of virtual links, which reduces complexity of the configuration and correlation between the virtual links of distinct types. As shown in Figure 4, main attributes of the bandwidth package comprise a transmission period $TB$, a start time $t$, and duration $td$.

In an embodiment, the method further comprises a following step. The one or more bandwidth package(s) are arranged according to a chronological order determined by a start time t of each bandwidth package.

In step S103, a total bandwidth of each bandwidth package, a transmission period of each bandwidth package, and duration of each bandwidth package are calculated according to the link information of each virtual link and a total bandwidth of the avionics data network.

Here parameters of the bandwidth package are determined. The parameters comprise the total bandwidth, the transmission period, and the duration of the bandwidth package. Reference is made to Figure 4. Virtual link 1 and virtual link 2 are assigned into bandwidth package 1, and virtual link 3 is assigned into bandwidth package 2. The bandwidth package shall meet the following conditions.

The transmission period of the bandwidth package is less than or equal to a minimum period $TV_{min}$ among the transmission period(s) of all virtual link(s) in the bandwidth package. The total bandwidth of the bandwidth package, i.e., $MB(kbit/s) = BPS \times td/TB$, is greater than or equal to a sum of the bandwidth(s) of all virtual link(s) in the bandwidth package. Assuming a total quantity of the virtual link(s) in the bandwidth package is n and the bandwidth of the $j^{th}$ virtual link is $M_j$, there is $MB \geq \sum_{j=1}^{n} M_j$ . All bandwidth packages do not overlap with each other in the time domain, and the bandwidth packages are arranged according to the chronological order determined by the start time $t$.

In an embodiment, calculating the total bandwidth, the transmission period, and the duration of each bandwidth package are calculated according to the link information of each virtual link and the total bandwidth of the avionics data network comprises the following steps.

The total bandwidth and the duration of an $m^{th}$ bandwidth package of the one or more bandwidth packages are calculated through $MB_m = BPS \times td_m/TB_m$ and $MB_m \geq \sum_{p=1}^{n} M_p$ .

The transmission period $TB_m$ of the $m^{th}$ bandwidth package is determined according to a minimum transmission period $TV_{min}$ among all virtual link(s) assigned to the $m^{th}$ bandwidth package.

$MB_m$ represents the total bandwidth of the $m^{th}$ bandwidth pack, $td_m$ represents the duration of the $m^{th}$ bandwidth package, n represents a quantity of all virtual link(s) assigned to the $m^{th}$ bandwidth package, and $M_p$ represents the bandwidth of a virtual link assigned to the $m^{th}$ bandwidth package.

In step S104, respective phases of all virtual links are determined according to the link information of each virtual link.

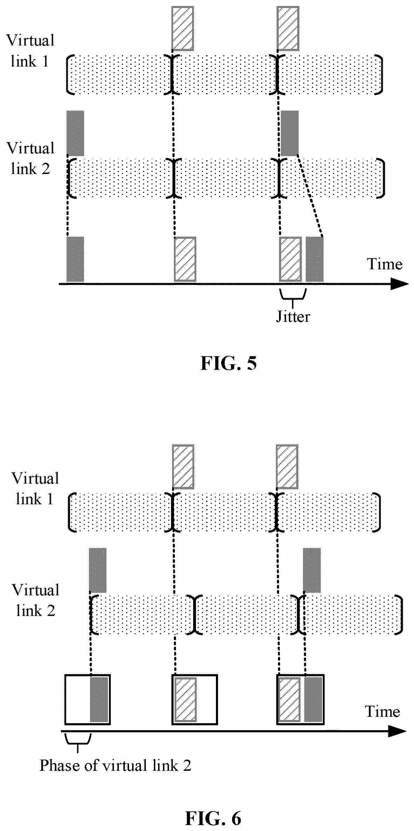

The phase(s) are set for the virtual link(s) in the bandwidth package. As shown in Figure 5, in the related art, multiple virtual links may try to transmit data at the same time and thus compete with each other. Only one virtual link can perform the transmission at that time, while other virtual links must be subject to a certain delay. Such delay is incidental, out of the scheduling plan, and called a "jitter" in the network transmission.

The phase of each virtual link in the bandwidth package is configured for eliminating the jitters. For the virtual link(s) in the same bandwidth package, the phase refers to a difference between a moment of starting the transmission of the corresponding virtual link and the start time of the bandwidth package, as shown in Figure 6.

Different phases may be set for the different virtual links. The phase $P_i$ of the $i^{th}$ virtual link meets $P_i \geq \sum_{j=1}^{i-1} tv_j$ , where $tV_j$ represents time required for completing data transmission of a $j^{th}$ virtual link in the same bandwidth package as the $i^{th}$ virtual link. That is, each virtual link is "delayed" by a time greater than or equal to a total transmission time of all virtual links previous to it, and thus there is no competition.

The bandwidth package(s) configured herein enables classifying a large number of virtual links and configuring them separately according to a requirement of actual integration. The configuration is less complex, the virtual links of distinct types are less correlated, and thus it is avoided that minor changes in configurations affect a large number of other virtual links.

The phase configured for the virtual link herein enables temporal isolation of the transmission of virtual links in the same bandwidth package. The network jitters due to competition are avoided.

Here the method for configuring the avionics data network is based on the bandwidth packages and the transmission phases of virtual links. Efficiency of integration is improved, the complexity of updating and iterating the network configurations is reduced, and the costs of testing and verifying the residency applications are reduced.

The method and the apparatus for configuring an avionics data network, the computer device, and the storage medium are provided according to embodiments of the present disclosure. The link information of each virtual link is obtained, where the link information comprises the maximum frame length and the transmission period. The one or more bandwidth packages are set according to the link information, and each virtual link is assigned to the corresponding bandwidth package. The total bandwidth, the transmission period, and the duration of each bandwidth package are calculated according to the link information of each virtual link and the total bandwidth of the avionics data network. The respective phases of all virtual links are determined according to the link information of each virtual link. The bandwidth package(s) configured herein enables classifying a large number of virtual links and configuring them separately according to a requirement of actual integration. The configuration is less complex, the virtual links of distinct types are less correlated, and thus it is avoided that minor changes in configurations affect a large number of other virtual links. That is, when configurations on a few virtual links need to be changed, the other virtual links are less impacted. Hence, during integration, it is not necessary to update and iterate all network configurations in case of minor changes. The integration efficiency is improved.

Here an application scenarios is provided. An avionics application of a door control system is taken as an example, where the assigned virtual link is as shown in Table 1 and the total bandwidth *BPS* of the avionics data network is 100Mbit/s.

Table 1 List of virtual links

| Name | Maximum frame length N(kbit) | Transmission period TV (ms) |
|---|---|---|
| VL_LightStatus | 16 | 64 |
| VL_SwitchStatus | 16 | 128 |
| VL_LightCommand | 32 | 128 |
| VL_PSEU_Command | 32 | 128 |
| VL_PSEU_FLY_CLK_Command | 128 | 128 |

In step 1, the bandwidth and the transmission duration of each virtual link are calculated, as shown in Table 2.

Table 2 Bandwidth and transmission time of virtual links

| Name | Bandwidth M (kbit/s) | Transmission time tv(ms) |
|---|---|---|
| VL_LightStatus | 250 | 0.15625 |
| VL_SwitchStatus | 125 | 0.15625 |
| VL_LightCommand | 250 | 0.3125 |
| VL_PSEU_Command | 250 | 0.3125 |
| VL_PSEU_FLY_CLK_Command | 1000 | 1.25 |

In step 2, a set of bandwidth packages are set according to the virtual links in the network. Besides some factors that need to be considered in normal operation, the configuration is mainly based on the transmission periods of the virtual links. Reference is made to Table 3.

Table 3 Configuration of bandwidth packages

| Bandwidth package | Included virtual links |
|---|---|
| Bandwidth Package 1 | VL_LightStatus |

(continued)

| Bandwidth package | Included virtual links |
|---|---|
| Bandwidth Package 2 | VL_SwitchStatus |
| | VL_LightCommand |
| | VL_PSEU_Command |
| | VL_PSEU_FLY_CLK_Command |

In step 3, the parameters of the bandwidth packages are determined, as shown in Table 4.

Table 4 Parameters of bandwidth packages

| Bandwidth package | Total bandwidth $MB(kbit/s)$ | Transmission period $TB(ms)$ | duration $td(ms)$ |
|---|---|---|---|
| Bandwidth Package 1 | 250 | 64 | 0.15625 |
| Bandwidth Package 2 | 1625 | 128 | 2.03125 |

In step 4, the phases of the virtual links in the bandwidth packages are determined, as shown in Table 5.

Table 5 Phases of virtual links

| Name | Bandwidth $M$ $(kbit/s)$ | Phase $P(ms)$ |
|---|---|---|
| VL_LightStatus | 250 | 0 |
| VL_SwitchStatus | 125 | 0 |
| VL_LightCommand | 250 | 0.15625 |
| VL_PSEU_Command | 250 | 0.46875 |
| VL_PSEU_FLY_CLK_Command | 1000 | 0.78125 |

An embodiment of the present disclosure is implemented according to the above configuration results. The above example is a simplified case, and actual configuration needs to take a variety of factors into account. These factors may not relate directly to the core of the method provided herein and hence are not illustrated in detail.

Magnitude of serial numbers of the steps in the above embodiment does not indicate an order of executing the steps. An execution order of processed is determined by their functions and an internal logic among them. The serial numbers shall not constitute any limitation on the implementation of embodiments of the present disclosure.

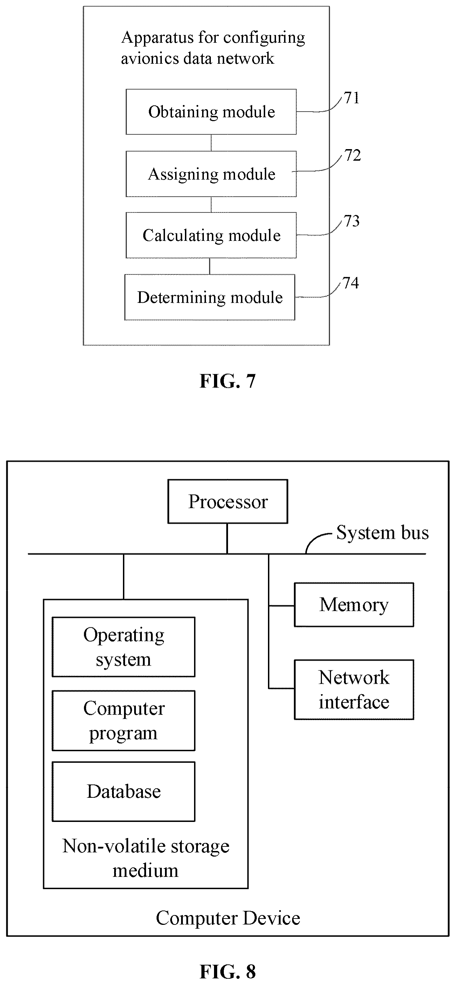

An apparatus of configuring an avionics data network is provided according to embodiments of the present disclosure. The apparatus corresponds to the method in the above embodiments. Reference is made to FIG. 7. Hereinafter details of functional modules of the apparatus are illustrated.

An obtaining module 71 is configured for obtaining link information of each virtual link in the avionics data network, where the link information comprises a maximum frame length and a transmission period.

An assigning module 72 is configured for setting bandwidth package(s) according to the link information of the virtual links and assigning each virtual link to a corresponding bandwidth package.

A calculating module 73 is configured for calculating a total bandwidth, a transmission period, and duration of each bandwidth package according to the link information of each virtual link and a total bandwidth of the avionics data network.

A determining module 74 is configured for determining respective phases of all virtual links according to the link information of each virtual link.

In an embodiment, the calculation module 73 is configured for: calculating a bandwidth of an $i^{th}$ virtual link through $M_i = N_i/TV_i$; and calculating a transmission time of the $i^{th}$ virtual link through $tv_i = N_i/BPS$. $M_i$ represents the bandwidth of the $i^{th}$ virtual link, $N_i$ represents the maximum frame length of the $i^{th}$ virtual link, $TV_i$ represents the transmission period of the $i^{th}$ virtual link, $tv_i$ represents the transmission time of the $i^{th}$ virtual link, and $BPS$ represents the total bandwidth of the avionics data network.

In an embodiment, the calculation module 73 is configured for: calculating the total bandwidth and the duration of an $m^{th}$ bandwidth package through $MB_m = BPS \times td_m/TB_m$ and $MB_m \geq \sum_{p=1}^{n} M_p$; and determining the transmission period $TB_m$ of the $m^{th}$ bandwidth package according to a minimum transmission period $TV_{min}$ among all virtual link(s) assigned to the $m^{th}$ bandwidth package. $MB_m$ represents the total bandwidth of the $m^{th}$ bandwidth pack, $td_m$ represents the duration of the $m^{th}$ bandwidth package, n represents a quantity of all virtual link(s) assigned to the $m^{th}$ bandwidth package, and $M_p$ represents the bandwidth of a virtual link assigned to the $m^{th}$ bandwidth package.

In an embodiment, the determining module 74 is configured for: determining the respective phase $P_i$ of the $i^{th}$ virtual link, where the respective phase $P_i$ satisfies $P_i \geq \sum_{j=1}^{i-1} tv_j$. $tv_j$ represents time required for completing data transmission of a $j^{th}$ virtual link in the bandwidth package to which the $i^{th}$ virtual link is assigned.

In an embodiment, the determining module 74 is configured for: arranging bandwidth packages according to a chronological order determined by a start time t of each bandwidth package.

Details of the apparatus(es) for configuring the avionics data network may refer to the foregoing details of the method(s) for configuring the avionics data network and hence would not be repeated herein. Individual modules in the apparatus(es) may be implemented, as a whole or in part, by means of software, hardware, or a combination thereof. Each module may be embedded in or independent from a processor of a computer device in a form of hardware and may alternatively be stored in a memory of the computer device in a form of software to enable the processor to invoke the module(s) to perform their respective operations.

A computer device is further provided according to an embodiment of the present disclosure. The computer device may be a server. An internal structure of the computer device may be as shown in Figure 8. The computer device comprises a processor, a storage, a network interface, and a database, which are connected via a system bus. The processor is configured to provide a capability of computation and control. The memory comprises a non-volatile storage medium and an internal memory. The non-volatile storage medium is configured to store an operating system, a computer program, and a database. The internal memory is configured to provide an environment for operation of the operating system and the computer programs in non-volatile storage media. The network interface is configured to communicate with an external terminal via network connection. The computer program is configured to be executed by the processor to implement the method for configuring the avionics data network.

In an embodiment, a computer device is provided. The computer comprises a memory, a processor, and a computer program which is stored on the memory and is capable of being executed by the processor. The computer program when executed by the processor implements following steps.

Link information of each virtual link of one or more virtual links in the avionics data network is obtained, where the link information comprises a maximum frame length and a transmission period.

One or more bandwidth packages are set according to the link information of the one or more virtual links, and each virtual link is assigned to a corresponding one of the one or more bandwidth packages.

A total bandwidth of each bandwidth package, a transmission period of each bandwidth package, and duration of each bandwidth package are calculated according to the link information of each virtual link and a total bandwidth of the avionics data network.

Respective phases of all virtual links are determined according to the link information of each virtual link.

A computer-readable storage medium is further provided according to an embodiment of the present disclosure. A computer program is stored on the computer-readable storage medium, and the computer program when executed by a processor implements following steps.

Link information of each virtual link of one or more virtual links in the avionics data network is obtained, where the link information comprises a maximum frame length and a transmission period.

One or more bandwidth packages are set according to the link information of the one or more virtual links, and each virtual link is assigned to a corresponding one of the one or more bandwidth packages.

A total bandwidth of each bandwidth package, a transmission period of each bandwidth package, and duration of each bandwidth package are calculated according to the link information of each virtual link and a total bandwidth of the avionics data network.

Respective phases of all virtual links are determined according to the link information of each virtual link.

A computer program product is further provided according to an embodiment of the present disclosure. The computer program product comprises a computer program, and the computer program when executed by a processor implements following steps.

Link information of each virtual link of one or more virtual links in the avionics data network is obtained, where the link information comprises a maximum frame length and a transmission period.

One or more bandwidth packages are set according to the link information of the one or more virtual links, and each virtual link is assigned to a corresponding one of the one or more bandwidth packages.

A total bandwidth of each bandwidth package, a transmission period of each bandwidth package, and duration of each bandwidth package are calculated according to the link information of each virtual link and a total bandwidth of the avionics data network.

Respective phases of all virtual links are determined according to the link information of each virtual link.

Those skilled in the art may understand that all or a part of a process in the method(s) illustrated in the foregoing embodiments may be implemented through instructing relevant hardware through a computer program, and the computer program may be stored in a non-volatile computer-readable storage medium. The computer program when executed may implement a flow as illustrated in each method embodiment. Herein any reference to a memory, a storage, a database, or another medium used in any embodiment of the present disclosure may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. Illustratively rather than restrictively, the RAM may be in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synch link DRAM (SLDRAM), a memory bus (Rambus) direct RAM (RDRAM), a direct memory bus dynamic RAM (DRDRAM), and a memory bus dynamic RAM (RDRAM), or the like.

Those skilled in the art may clearly appreciate that for the sake of conciseness and brevity of description, the division of the aforementioned functional units and/or modules is merely exemplary. In practice, the aforementioned functional units and/or modules may be assigned to different functional units or different modules on requirement. That is, an internal structure of the apparatus may be divided into different functional units or modules to complete all or a part of the aforementioned functions.

The above embodiments are only intended for illustrating rather than limiting technical solutions of the present disclosure. Although the present disclosure has been described in detail with reference to the foregoing embodiments, those skilled in the art may appreciate that the technical solutions recorded in the foregoing embodiments may be modified or some of the technical features in the solutions may be replaced, and these modifications or replacements shall fall within the scope of protection of the present disclosure as long as they do not make an essence of the corresponding technical solutions depart from a spirit and a scope of the original technical solutions in the embodiments of the present disclosure.

**Claims**

1. A method for configuring an avionics data network, comprising:

   obtaining link information of each virtual link of one or more virtual links in the avionics data network, wherein the link information comprises a maximum frame length and a transmission period;
   setting one or more bandwidth packages according to the link information of the one or more virtual links, and assigning each virtual link to a corresponding one of the one or more bandwidth packages;
   calculating a total bandwidth of each bandwidth package, a transmission period of each bandwidth package, and duration of each bandwidth package according to the link information of each virtual link and a total bandwidth of the avionics data network; and
   determining respective phases of all virtual links according to the link information of each virtual link.

2. The method of claim 1, further comprising:

   calculating a bandwidth of an $i^{th}$ virtual link of the one or more virtual links through $M_i = N_i/TV_i$; and
   calculating a transmission time of the $i^{th}$ virtual link through $tv_i = N_i/BPS$;
   wherein $M_i$ represents the bandwidth of the $i^{th}$ virtual link, $N_i$ represents the maximum frame length of the $i^{th}$ virtual link, $TV_i$ represents the transmission period of the $i^{th}$ virtual link, $tv_i$ represents the transmission time of the $i^{th}$ virtual link, and $BPS$ represents the total bandwidth of the avionics data network.

3. The method of claim 2, wherein calculating the total bandwidth of each bandwidth package, the transmission period of each bandwidth package, and the duration of each bandwidth package according to the link information of each virtual link and the total bandwidth of the avionics data network comprises:

   calculating the total bandwidth and the duration of an $m^{th}$ bandwidth package of the one or more bandwidth packages through $MB_m = BPS \times td_m/TB_m$ and $MB_m \geq \sum_{p=1}^{n} M_p$ ; and
   determining the transmission period $TB_m$ of the $m^{th}$ bandwidth package according to a minimum transmission period $TV_{min}$ among all virtual links assigned to the $m^{th}$ bandwidth package among the one or more virtual links;
   wherein $MB_m$ represents the total bandwidth of the $m^{th}$ bandwidth pack, $td_m$ represents the duration of the $m^{th}$

bandwidth package, n represents a quantity of all virtual links assigned to the $m^{th}$ bandwidth package, and $M_p$ represents the bandwidth of a virtual link assigned to the $m^{th}$ bandwidth package among the one or more virtual links.

4. The method of claim 3, determining the respective phases of all virtual links according to the link information of each virtual link comprises:

   determining the respective phase $P_i$ of the $i^{th}$ virtual link, wherein the respective phase $P_i$ satisfies $P_i \geq \sum_{j=1}^{i-1} tv_j$, and $tv_j$ represents time required for completing data transmission of a $j^{th}$ virtual link in a bandwidth package, to which the $i^{th}$ virtual link is assigned, among the one or more bandwidth packages.

5. The method of claim 1, further comprising:
   arranging the one or more bandwidth packages according to a chronological order determined by a start time t of each bandwidth package.

6. An apparatus for configuring an avionics data network, comprising:

   an obtaining module, configured for obtaining link information of each virtual link of one or more virtual links in the avionics data network, wherein the link information comprises a maximum frame length and a transmission period;
   an assigning module, configured for setting one or more bandwidth packages according to the link information of the one or more virtual links and assigning each virtual link to a corresponding one of the one or more bandwidth packages;
   a calculating module, configured for calculating a total bandwidth of each bandwidth package, a transmission period of each bandwidth package, and duration of each bandwidth package according to the link information of each virtual link and a total bandwidth of the avionics data network; and
   a determining module, configured for determining respective phases of all virtual links according to the link information of each virtual link.

7. The device of claim 6, wherein the calculating module is configured for:

   calculating a bandwidth of an $i^{th}$ virtual link of the one or more virtual links through $M_i = N_i/TV_i$; and
   calculating a transmission time of the $i^{th}$ virtual link through $tv_i = N_i/BPS$;
   wherein $M_i$ represents the bandwidth of the $i^{th}$ virtual link, $N_i$ represents the maximum frame length of the $i^{th}$ virtual link, $TV_i$ represents the transmission period of the $i^{th}$ virtual link, $tv_i$ represents the transmission time of the $i^{th}$ virtual link, and $BPS$ represents the total bandwidth of the avionics data network.

8. The device of claim 7, wherein the calculating module is configured for:

   calculating the total bandwidth and the duration of an $m^{th}$ bandwidth package of the one or more bandwidth packages through $MB_m = BPS \times td_m/TB_m$ and $MB_m \geq \sum_{p=1}^{n} M_p$; and
   determining the transmission period $TB_m$ of the $m^{th}$ bandwidth package according to a minimum transmission period $TV_{min}$ among all virtual links assigned to the $m^{th}$ bandwidth package among the one or more virtual links;
   wherein $MB_m$ represents the total bandwidth of the $m^{th}$ bandwidth pack, $td_m$ represents the duration of the $m^{th}$ bandwidth package, n represents a quantity of all virtual links assigned to the $m^{th}$ bandwidth package, and $M_p$ represents the bandwidth of a virtual link assigned to the $m^{th}$ bandwidth package among the one or more virtual links.

9. A computer device, comprises:

   a memory,
   a processor, and
   a computer program stored in the memory, wherein the computer program is executable on the processor, and the computer program when executed by the processor implements the method according to any one of claims 1 to 7.

10. A computer-readable storage medium, storing a computer program, wherein the computer program when executed by a processor implements the method according to any one of claims 1 to 7.

Obtain link information of each virtual link in the avionics data network, where the link information comprises a maximum frame length and a transmission period ⟋ S101

↓

Set bandwidth package(s) according to the link information of the virtual link(s), and assign each virtual link to a corresponding bandwidth package ⟋ S102

↓

Calculate a total bandwidth, a transmission period, and duration of each bandwidth package according to the link information of each virtual link and a total bandwidth of the avionics data network ⟋ S103

↓

Determine respective phases of all virtual link(s) according to the link information of each virtual link ⟋ S104

**FIG. 1**

Preliminary input

Collect communication requirement of all partitions

↓

Assign virtual link to all communication data

↓

Start

↓

Calculate maximum frame length and period of each virtual link

→

Configure a set of bandwidth packages according to virtual links in the network

↓

Assign virtual links to bandwidth packages

↓

Determine phase for virtual links in bandwidth packages

↓

Terminate configuration

**FIG. 2**

Source
data

Transmit
to
network

Virtual
link

Time

Period

**FIG. 3**

Virtual link 1

Virtual link 2

Virtual link 3

Bandwidth
package
configuration

| Package 1 | Package 2 | Package 1 | Package 1 | Package 2 | Package 1 |

Time

$t_1$

$TB_1$

$td_1$

**FIG. 4**

**FIG. 5**

**FIG. 6**

Apparatus for configuring
avionics data network

Obtaining module — 71

Assigning module — 72

Calculating module — 73

Determining module — 74

**FIG. 7**

Processor

System bus

Memory

Network
interface

Operating
system

Computer
program

Database

Non-volatile storage
medium

Computer Device

**FIG. 8**

**EP 4 661 354 A1**

## INTERNATIONAL SEARCH REPORT

| International application No. |
|---|
| **PCT/CN2023/122011** |

### A. CLASSIFICATION OF SUBJECT MATTER

H04L 41/0803(2022.01)i

According to International Patent Classification (IPC) or to both national classification and IPC

### B. FIELDS SEARCHED

Minimum documentation searched (classification system followed by classification symbols)

IPC:H04L H04W H04B

Documentation searched other than minimum documentation to the extent that such documents are included in the fields searched

Electronic data base consulted during the international search (name of data base and, where practicable, search terms used)

CNTXT, CNABS, DWPI, ENTXTC: 虚拟链路, 虚链路, 带宽, 带宽包, 周期, 帧长, 相位, 时间, 最大, 传输, virtual link, bandwidth, bandwidth group, period, frame length, phase

### C. DOCUMENTS CONSIDERED TO BE RELEVANT

| Category* | Citation of document, with indication, where appropriate, of the relevant passages | Relevant to claim No. |
|---|---|---|
| PX | CN 116614354 A (COMAC BEIJING AERONAUTICAL SCIENCE & TECHNOLOGY RESEARCH INSTITUTE (BASTRI) et al.) 18 August 2023 (2023-08-18) claims 1-10 | 1-10 |
| A | CN 110601744 A (CHENGDU UESTC OPTICAL COMMUNICATIONS CORPORATION) 20 December 2019 (2019-12-20) description, paragraphs 0004-0016 | 1-10 |
| A | CN 107257311 A (XI'AN MICROELECTRONICS TECHNOLOGY INSTITUTE) 17 October 2017 (2017-10-17) entire document | 1-10 |
| A | US 2016234126 A1 (ERICSSON TELEVISION INC.) 11 August 2016 (2016-08-11) entire document | 1-10 |

☐ Further documents are listed in the continuation of Box C.      ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 December 2023** | **15 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/122011**

| Patent document cited in search report | | | Publication date (day/month/year) | Patent family member(s) | | | Publication date (day/month/year) |
|---|---|---|---|---|---|---|---|
| CN | 116614354 | A | 18 August 2023 | None | | | |
| CN | 110601744 | A | 20 December 2019 | None | | | |
| CN | 107257311 | A | 17 October 2017 | None | | | |
| US | 2016234126 | A1 | 11 August 2016 | WO | 2016128890 | A1 | 18 August 2016 |

Form PCT/ISA/210 (patent family annex) (July 2022)